# EUROPÄISCHE PATENTSCHRIFT

(11) **EP 4 087 760 B1**
(45) Veröffentlichungstag und Bekanntmachung des Hinweises auf die Patenterteilung: **17.07.2024**
(21) Anmeldenummer: 20839121.9
(22) Anmeldetag: 29.12.2020
(51) Int. Cl.: B60T 17/22

(54) **SYSTEM UND VERFAHREN ZUR FAHRZEUGKOMPONENTENVERHALTENSBEWERTUNG**
SYSTEM AND METHOD FOR EVALUATING THE BEHAVIOUR OF A VEHICLE COMPONENT
SYSTÈME ET PROCÉDÉ POUR ÉVALUER LE COMPORTEMENT D'UN SCOMPOSANTE D'UN VÉHICULE

(30) Priorität: 08.01.2020 DE 102020100225
(43) Veröffentlichungstag der Anmeldung: 16.11.2022
(73) Patentinhaber: KNORR-BREMSE Systeme für Nutzfahrzeuge GmbH, 80809 München (DE)
(72) Erfinder: FLUMM, Simon, 75446 Wiernsheim (DE); GRAF, Peter, 73728 Esslingen a. N. (DE); ALBAYRAK, Kaan, 70469 Stuttgart (DE)
(86) Internationale Anmeldenummer: PCT/EP2020/087993
(87) Internationale Veröffentlichungsnummer: WO 2021/140048

(56) Entgegenhaltungen:
- EP-A1- 1 548 256
- WO-A2-2015/058119
- DE-A1- 10 319 493
- DE-A1- 102014 006 319
- DE-A1- 102014 008 490
- DE-A1- 102017 220 327
- US-A1- 2004 162 650

## Beschreibung

Die Erfindung betrifft eine Vorrichtung und ein Verfahren zur Bewertung des Verhaltens von Fahrzeugkomponenten und betrifft insbesondere eine solche Vorrichtung und ein solches Verfahren zur Bewertung von Fahrzeugkomponentenverhalten, die sich verschleißbedingt ändern.

Im mittel- bis langfristigen Betrieb unterliegen Fahrzeugkomponenten verschleißbedingten Änderungen. Dies führt zu einem insgesamt nicht konstanten Fahrzeugverhalten. So kann beispielsweise der Verschleiß von Bremsbelägen den Luftspalt zwischen Bremsscheibe und Bremsklotz vergrößern und dadurch eine verlängerte Totzeit, d.h. eine Verlängerung der Zeitdauer von der Ausgabe des Bremssignals bis zum Wirksamwerden der Bremse bewirken. Gleichfalls kann beispielsweise der Verschleiß einer Bremsscheibe die Bremsleistung insgesamt reduzieren oder Verschleiß in einem Antriebssystem die Antriebsleistung reduzieren.

Im manuellen Fahrbetrieb wird ein menschlicher Fahrer dieses unbekannte Verhalten in seiner Aufgabe als Fahrzeugführer kompensieren und sein Fahrzeugführungsverhalten an den aktuellen Fahrzeugzustand anpassen.

Im assistierten Fahrbetrieb hingegen ist die Regeleinheit oft speziell an bestimmte Eigenschaften des Zielsystems adaptiert und somit auf ein bestimmtes Verhalten der Fahrzeugkomponente angepasst. Kommt es zu einer Veränderung des Verhaltens von Fahrzeugkomponenten oder deren Zustand, kann hierauf von dem System nicht oder nur bedingt reagiert werden.

Bisher wurde beispielsweise bei der Bewertung des Fahrzeugverhaltens im Platooning der Einfluss einzelner Komponenten in einem Fahrzeug nicht oder nur begrenzt mit einbezogen, stattdessen wurde der Fokus dort auf das Gesamtfahrzeugverhalten gelegt. Der Fokus der vorliegenden Erfindungsmeldung erweitert die Bewertung eines Fahrzeugverbundes auch auf einzelne Systeme und Komponenten.

Die Druckschrift EP 1 548 256 A1 stellt eine Verschlechterungsdiagnosevorrichtung zur Diagnose eines Verschlechterungszustands eines Abgasreinigers, der in einem Abgaskanal in einem Motor angeordnet ist, basierend auf einem Sensorwert eines Abgassensors, der stromabwärts des Reinigers angeordnet ist, bereit. Die Vorrichtung umfasst eine Erfassungssignal-Erzeugungseinheit zum Erzeugen eines Erfassungssignals mit bestimmten Frequenzkomponenten und zum Multiplizieren des erzeugten Signals mit einer Basiskraftstoffeinspritzmenge, um eine Kraftstoffeinspritzmenge zu berechnen, und eine Abgasreinigungsauswertungseinrichtung zum Extrahieren einer dem Erfassungssignal entsprechenden Frequenzantwort aus einer Ausgabe des Abgassensors des Motors, wobei die Ausgabe auf die berechnete Kraftstoffeinspritzmenge anspricht, um einen Zustand des Reinigers auf der Grundlage der extrahierten Frequenzantwort zu bestimmen.

Es ist Aufgabe der Erfindung, die Nachteile aus dem Stand der Technik zu beseitigen und eine Lehre vorzustellen, die es erlaubt, automatischen Betrieb eines Kraftfahrzeugs mit durch Verschleiß verändertem Fahrzeugkomponentenverhalten zu ermöglichen. Die Aufgabe wird gelöst durch die Gegenstände der unabhängigen Ansprüche. Vorteilhafte Weiterentwicklungen sind Gegenstand der Unteransprüche.

Offenbart wird ein Verfahren zur Fahrzeugkomponentenverhaltensbewertung, das die Schritte aufweist: Abgabe eines Steuersignals durch ein Steuergerät eines Kraftfahrzeuges an eine Fahrzeugkomponente, Erfassung einer Reaktion des Kraftfahrzeugs auf das Steuersignal, Ermittlung eines Fahrzeugkomponentenverhaltens, Klassifizierung des Fahrzeugkomponentenverhaltens, Anpassung der Ansteuerung der Kraftfahrzeugkomponente durch das Steuergerät. Dies erlaubt eine Anpassung des Steuervorgangs an ein geändertes Fahrzeugkomponentenverhalten.

Offenbart wird ferner, dass der Erfassungsschritt, der Ermittlungsschritt und der Klassifizierungsschritt durch das Steuergerät erfolgen.

Erfindungsgemäß ist die Erfassung einer Reaktion eine Beschleunigungserfassung, eine Rotationserfassung oder eine Neigungserfassung und das Steuersignal ein Lenkeingriffssignal an ein Lenksystem, ein Bremssignal an ein Bremssystem oder ein Antriebssignal an ein Antriebssystem.

Offenbart wird ferner, dass das Verfahren ferner die Schritte aufweist: Übermitteln der erfassten Reaktion des Kraftfahrzeugs von Informationen über ein Datenübertragungsnetz an ein externes Informationssystem mit einer Verarbeitungseinheit, wobei der Ermittlungsschritt und der Klassifizierungsschritt durch die Verarbeitungseinheit durchgeführt wird, und Übermitteln von Information über das klassifizierte Fahrzeugkomponentenverhalten über das Datenübertragungsnetz an das Steuergerät.

Offenbart wird ferner, dass das Fahrzeugkomponentenverhalten eine Totzeit, eine Bremsleistung, eine Lenkleistung oder eine Antriebsleistung ist.

Offenbart wird ferner ein System zur Fahrzeugkomponentenverhaltensbewertung, das aufweist: ein Kraftfahrzeug mit: einem Steuergerät mit mindestens einem Sensor zum Erfassen eines Kraftfahrzeugverhaltens, und mindestens einer gesteuerten Fahrzeugkomponente, wobei das System eingerichtet ist, das Verfahren nach einem der vorhergehend offenbarten Verfahrensaspekte durchzuführen.

Erfindungsgemäß ist die mindestens eine gesteuerte Fahrzeugkomponente ein Lenksystem, ein Bremssystem oder ein Antriebssystem.

Erfindungsgemäß ist der mindestens eine Sensor ein Beschleunigungssensor, ein Rotationssensor oder ein Neigungssensor.

Offenbart wird ferner, dass das System ferner aufweist: ein externes Informationssystem mit einer Datenverarbeitungseinheit, und eine Datennetzschnittstelle des Steuergeräts, über die eine Kommunikationsverbindung mit dem externen Informationssystem mit der Verarbeitungseinheit herstellbar ist.

Ziel der Erfindung ist es, das zunächst unbekannte Verhalten eines oder mehrerer Systeme und einzelner Komponenten, in einem Fahrzeug oder Fahrzeugverbund zu analysieren und dessen Verhalten und Zustand zu bewerten. Dies kann durch passives Überwachen oder aktives Ansprechen der Eingangsgrößen in das System oder in eine Komponente und Erfassen der Fahrzeugreaktion, durch z.B. Sensoren oder auf einem Datenlink zur Verfügung gestellten Ausgangsgrößen erfolgen.

Mit Hilfe des bewerteten Zustandes und des bewerteten Verhaltens, kann eine Optimierung einmalig oder fortlaufend von Regelalgorithmen vorgenommen werden um z.B. ein Totzeitverhalten eines Bremssystems, eines Antriebsstrangs und oder eines Lenksystems, zu berücksichtigen.

Mit Hilfe des bewerteten Zustandes und des bewerteten Verhaltens kann eine Bewertung über Verschleißerscheinungen und oder Fehlfunktionalitäten getroffen werden, z.B. durch eine geringere Fahrzeugverzögerung bei gleichbleibenden äußeren Einflüssen. Anhand dieser Bewertung können Informationen, Hinweise, Warnungen und Alarmierungen generiert werden, die im eigenen Fahrzeug oder auf einem externen Informationssystem weiterverarbeitet werden.

Mit Hilfe des bewerteten Zustandes und des bewerteten Verhaltens, können z.B. durch eine langfristige Beobachtung, Hinweise generiert werden über günstige oder ungünstige Fahrzeugkonfigurationen. Mit Hilfe eines externen Informationssystems, das z.B. über eine Internetverbindung verbunden sein kann, können dann verschiedene Fahrzeugkonfigurationen verglichen und Hinweise für zukünftige Entwicklungen daraus generiert werden. Z.B. über das Zusammenspiel von Lenk- und Bremssystem verschiedener Hersteller, die maßgeblich das Längs- und Querführungsverhalten des Fahrzeugs beeinflussen.

Die Erfindung wird nachfolgend mit einem Ausführungsbeispiel anhand der Figur beschrieben.

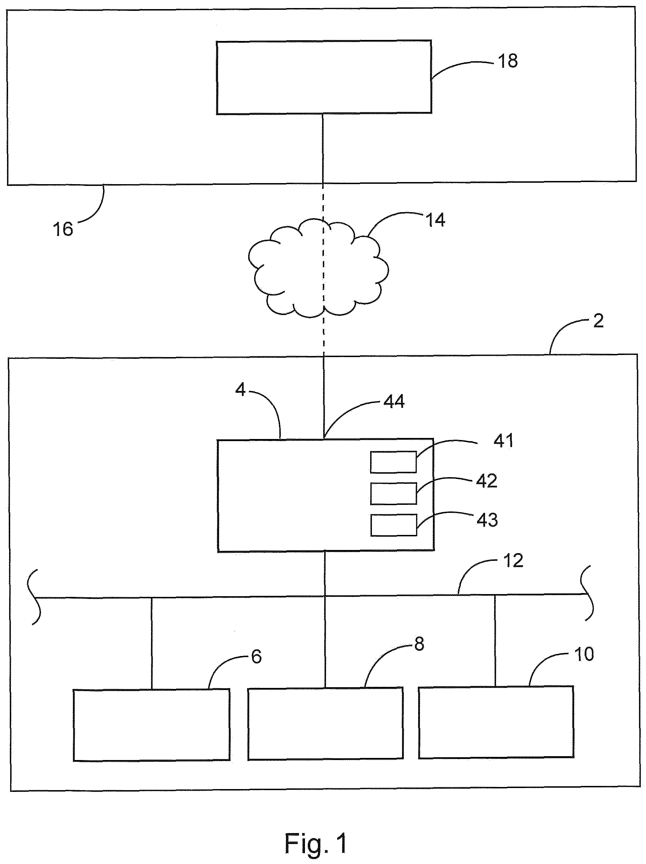

Fig. 1 zeigt eine schematische Darstellung eines erfindungsgemäßen Fahrzeugkomponentenverhaltensbewertungssystems.

Anhand von Fig. 1 wird im Folgenden ein erstes Ausführungsbeispiel für ein erfindungsgemäßes Fahrzeugkomponentenverhaltensbewertungssystem beschrieben.

Ein Kraftfahrzeug 2, beispielsweise ein Lastkraftwagen ist mit einem elektronischen Steuergerät 4 (ECU, electronic control unit), und Fahrzeugkomponenten wie einem Lenksystem 6, einem Bremssystem 8 und einem Antriebsystem 10 ausgerüstet. Das elektronische Steuergerät 4 ist über eine oder mehrere Datenverbindungen 12 mit dem Lenksystem 6, dem Bremssystem 8 und dem Antriebssystem 10 verbunden. Im Ausführungsbeispiel ist die Datenverbindung 12 über einen CAN-Bus implementiert. Das Steuergerät 4 verfügt über Sensoren wie beispielsweise einen oder mehrere Beschleunigungssensoren 41, womit Längs- und Querbeschleunigungserfassung des Kraftfahrzeugs 2 erfassbar sind, einen Rotationssensor 42, womit Rotationen des Kraftfahrzeugs 1 um die Längs-, Quer- oder Hochachse erfassbar sind, und Neigungssensoren 43, womit eine Neigung des Kraftfahrzeugs erfassbar ist. Über die Datenverbindung 12 können das Lenksystem 6, das Bremssystem 8 und das Antriebssystem 10 gesteuert werden, beispielsweise ein Bremssignal an das Bremssystem 8 übermittelt werden. Alternativ erhält das Steuergerät 4 die Daten von externen, über eine Datenleitung angeschlossenen Sensoren.

Gibt nun das Steuergerät 4 ein Steuersignal an eine Fahrzeugkomponente aus, also beispielsweise ein Lenksignal an das Lenksystem 6, ein Bremssignal an das Bremssystem 8 oder ein Leistungsänderungssignal an das Antriebssystem 10, erfasst es mittels seiner Sensoren 41, 42, 43 die Reaktion des Kraftfahrzeugs 1, beispielsweise eine Querbeschleunigung, eine Rotation um die Hochachse oder eine Neigung durch einen Lenkeingriff, eine negative Längsbeschleunigung durch einen Bremseingriff oder eine positive Längsbeschleunigung durch einen Antriebseingriff. Hierüber kann das Steuergerät 4 Fahrzeugkomponentenverhalten ermitteln, wie beispielsweise eine Totzeit der Fahrzeugkomponente, d.h. die Zeitdauer von der Abgabe des Steuersignals bis zum Wirksamwerden der Fahrzeugkomponente, eine Bremsleistung oder eine Antriebsleistung. Diese Ermittlung wird bei jeder Steuersignalabgabe durchgeführt, sodass beispielsweise über statistische Algorithmen eine Veränderung des Fahrzeugkomponentenverhaltens über die Zeit erfassbar ist und das Fahrzeugkomponentenverhalten beispielsweise über auf künstlicher Intelligenz basierender Algorithmen bewertet und klassifiziert wird.

Die durch Verschleiß bedingte Veränderung von Fahrzeugkomponentenverhalten hat im Allgemeinen einen Einfluss auf die Regelgüte beispielsweise einer automatischen oder autonomen Steuerung des Kraftfahrzeugs. Durch Erfassung der Änderung von Fahrzeugkomponentenverhalten kann die Ansteuerung der Fahrzeugkomponenten an deren Veränderung angepasst werden und damit die Regelgüte verbessert werden, was sich in erhöhter Sicherheit und erhöhtem Komfort niederschlagen kann.

In einer Abwandlung des ersten Ausführungsbeispiels verfügt das Steuergerät 4 über eine Datennetzschnittstelle 44, insbesondere eine Datenweitverkehrsnetzschnittstelle, wie beispielsweise einem GSM-Modul, einem UMTS-Modul oder einem LTE-Modul. Über die Datenweitverkehrsnetzschnittstelle 44 ist über ein Datenweitverkehrsnetz 14, beispielsweise dem Internet, eine Verbindung mit einem entfernten Informationssystem 16 möglich, das eine Datenverarbeitungseinheit 18 aufweist. Die vom Steuergerät 4 abgegebenen Steuersignale werden zusammen mit den erfassten Sensorinformationen über das Datenweitverkehrsnetz an das entfernte Informationssystem 16 übermittelt und von der Datenverarbeitungseinrichtung 18 anstelle von dem Steuergerät 4 erfasst, ausgewertet und klassifiziert. Die bewerteten und klassifizierten Daten werden dann über das Datenweitverkehrsnetz 14 an das Steuergerät zurückübermittelt und durch dieses eine der Klassifizierung entsprechende Anpassung der Ansteuerung der Fahrzeugkomponenten vorgenommen. Durch Auslagerung der Erfassung, Auswertung und Klassifizierung von dem Steuergerät 4 auf die Datenverarbeitungseinrichtung 18 kann das Steuergerät von rechenintensiver Belastung befreit werden und entsprechend rechenleistungsschwächer dimensioniert werden oder eine Überlastung kann verhindert werden.

Das Ausführungsbeispiel ist lediglich als beispielhafte Ausgestaltung der Erfindung wie sie durch die Ansprüche definiert ist vorgesehen und stellt keine Einschränkung der durch die Ansprüche definierten Erfindung dar. Für den Fachmann erkennbar sind im Rahmen des Schutzbereichs der Ansprüche Ausgestaltungen möglich, die vom Ausführungsbeispiel abweichen können.

So ist im Ausführungsbeispiel das Steuergerät mit den Sensoren 41, 42 43 versehen. Alternativ können die Sensoren 41, 42, 43 auch über die Datenverbindung 12 mit dem Steuergerät verbunden und auslesbar sein. Alternativ können die Sensoren auch in den Fahrzeugkomponenten wie Lenksystem 6, Bremssystem 8 oder Antriebssystem 10 vorgesehen und durch das Steuergerät 4 auslesbar sein.

Das Ausführungsbeispiel bezieht sich auf ein Kraftfahrzeug 2. Alternativ kann das System Komponentenverhalten von Fahrzeugkomponenten eines Fahrzeugverbundes erfassen, auswerten und klassifizieren.

Im Ausführungsbeispiel erfolgen die Erfassung, Auswertung und Klassifizierung bei der Abgabe von jedem Steuersignal durch das Steuergerät. Alternativ können die Erfassung, Auswertung und Klassifizierung in größeren Abständen beispielsweise jeder hundertsten Steuersignalabgabe oder in festen Zeitintervallen wie einmal pro Stunde erfolgen, oder wenn das Steuersignal bestimmte Kriterien erfüllt, wie beispielsweise dass ein Steuervorgang eine bestimmte Signifikanz überschreitet.

Im Ausführungsbeispiel weist das Steuergerät 4 die Datennetzschnittstelle 44 auf. Alternativ kann die Datennetzschnittstelle 44 Teil einer Fahrzeugkomponente wie Lenksystem 6, Bremssystem 8 oder Antriebssystem 10 oder eines mit dem Steuergerät 4 über die Datenverbindung 12 verbundenen weiteren Steuergeräts sein.

Im Ausführungsbeispiel wurden bestimmte Datenverbindungen wie ein CAN-Bus oder eine GSM-, UMTS- oder LTE-Verbindung genannt. Hier ist auch jede weitere vom Fachmann für geeignet gehaltene Technologie verwendbar.

In der Beschreibung sind die Terme "und", "oder" und "entweder ... oder" als Junktor in der Bedeutung der logischen Konjunktion (mathematisches UND), als Junktor in der Bedeutung der logischen Adjunktion (mathematisches ODER, oft auch "und/oder") bzw. als Junktor in der Bedeutung der logischen Kontravalenz (mathematisches Exklusiv-ODER) verwendet.

In der Beschreibung oder den Ansprüchen angegebene Verfahrensschritte dienen lediglich der Auflistung der erforderlichen Verfahrensschritte. Sie implizieren nur dort eine Reihenfolge, wo die Reihenfolge explizit angegeben ist oder sich für den Fachmann als notwendig ergibt. Insbesondere Impliziert die Auflistung keine abschließende Aufzählung.

### BEZUGSZEICHENLISTE

- 2: Kraftfahrzeug, Lastkraftwagen
- 4: elektronisches Steuergerät
- 6: Lenksystem
- 8: Bremssystem
- 10: Antriebssystem
- 12: Datenverbindung |
- 14: Datenweitverkehrsnetz
- 16: entferntes Informationssystem
- 18: Datenverarbeitungseinrichtung
- 41: Beschleunigungssensor
- 42: Rotationssensor
- 43: Neigungssensor
- 44: Datenweitverkehrsnetzschnittstelle

## Patentansprüche

1. Ein Verfahren zur Fahrzeugkomponentenverhaltensbewertung, das die Schritte aufweist:
Abgabe eines Steuersignals durch ein Steuergerät (4) eines Kraftfahrzeuges (2) an eine Fahrzeugkomponente (6, 8, 10),
Erfassung einer Reaktion des Kraftfahrzeugs (2) auf das Steuersignal,
Ermittlung einer Veränderung eines Fahrzeugkomponentenverhaltens,
Klassifizierung des Fahrzeugkomponentenverhaltens,
Anpassung der Ansteuerung der Kraftfahrzeugkomponente (6, 8, 10) an die Veränderung der Fahrzeugkomponente durch das Steuergerät (4),
dadurch gekennzeichent, dass
die Erfassung einer Reaktion eine Beschleunigungserfassung, eine Rotationserfassung oder eine Neigungserfassung ist, und
das Steuersignal ein Lenkeingriffsignal an ein Lenksystem (6), ein Bremssignal an ein Bremssystem (8) oder ein Antriebsignal an ein Antriebssystem (10) ist.

2. Das Verfahren nach dem vorhergehenden Anspruch, wobei der Erfassungsschritt, der Ermittlungsschritt und der Klassifizierungsschritt durch das Steuergerät (4) erfolgen.

3. Das Verfahren nach einem der vorhergehenden Ansprüche, das ferner die Schritte aufweist:
Übermitteln der erfassten Reaktion des Kraftfahrzeugs von Informationen über ein Datenübertragungsnetz (14) an ein externes Informationssystem (16) mit einer Verarbeitungseinheit (18), wobei der Ermittlungsschritt und der Klassifizierungsschritt durch die Verarbeitungseinheit (18) durchgeführt werden, und
Übermitteln von Information über das klassifizierte Fahrzeugkomponentenverhalten über das Datenübertragungsnetz (14) an das Steuergerät (4).

4. Das Verfahren nach einem der vorhergehenden Ansprüche, wobei das Fahrzeugkomponentenverhalten eine Totzeit, eine Bremsleistung oder eine Antriebsleistung ist.

5. Ein System zur Fahrzeugkomponentenverhaltensbewertung, das aufweist:
ein Steuergerät (4)
mindestens einen Sensor (41, 42, 43) zum Erfassen eines Kraftfahrzeugverhaltens, und
mindestens eine gesteuerte Fahrzeugkomponente (6, 8, 10), dadurch gekennzeichent, dass das System eingerichtet ist, das Verfahren nach einem der vorhergehenden Verfahrensansprüche durchzuführen,
wobei der mindestens eine Sensor ein Beschleunigungssensor (41), ein Rotationssensor (42) oder ein Neigungssensor (43) ist,
wobei die mindestens eine gesteuerte Fahrzeugkomponente ein Lenksystem (6), ein Bremssystem (8) oder ein Antriebssystem (10) ist.

6. Das System nach Anspruch 5, wobei der mindestens eine Sensor (41, 42, 43) von dem Steuergerät (4) oder der mindestens einen gesteuerten Fahrzeugkomponente (6, 8, 10) aufgewiesen wird oder ein separates Bauteil oder Bestandteil eines weiteren Bauteils ist, das über eine Datenverbindung (12) mit dem Steuergerät (4) verbunden ist.

7. Das System nach einem der vorhergehenden Ansprüche 5 oder 6, das ferner aufweist:
ein externes Informationssystem (16) mit einer Datenverarbeitungseinheit (18), und
eine Datennetzschnittstelle (44), über die eine Kommunikationsverbindung mit dem externen Informationssystem (16) mit der Verarbeitungseinheit (18) herstellbar ist.

8. Das System nach dem vorhergehenden Anspruch 7, wobei die Datennetzschnittstelle (44) von dem Steuergerät (4) aufgewiesen wird oder ein separates Bauteil oder Bestandteil eines weiteren Bauteils ist, das über die Datenverbindung (12) mit dem Steuergerät (4) verbunden ist.

## Claims

1. A method for evaluating the behavior of a vehicle component, comprising the steps:
issuing a control signal by means of a control unit (4) of a motor vehicle (2) to a vehicle component (6, 8, 10),
detecting a response of the motor vehicle (2) to the control signal,
determining a change in the behavior of a vehicle component,
classifying the behavior of the vehicle component,
adapting the actuation of the motor vehicle component (6, 8, 10) to the change in the vehicle component by means of the control unit (4),
**characterized in that** the detection of a response is an acceleration detection, a rotation detection, or a tilt detection, and
the control signal is a steering intervention signal to a steering system (6), a brake signal to a brake system (8), or a drive signal to a drive system (10).

2. The method as claimed in the previous claim, wherein the detection step, the determination step and the classification step are carried out by the control unit (4).

3. The method as claimed in any one of the previous claims, which furthermore comprises the steps:
transmitting the detected response of the motor vehicle in the form of information via a data transmission network (14) to an external information system (16) having a processing unit (18), the determination step and the classification step being carried out by the processing unit (18), and
transmitting information about the classified vehicle component behavior to the control unit (4) via the data transmission network (14).

4. The method as claimed in any one of the previous claims, wherein the vehicle component behavior is a dead time, a braking power, or a drive power.

5. A system for evaluating the behavior of a vehicle component, comprising:
a control unit (4),
at least one sensor (41, 42, 43) for detecting a behavior of a motor vehicle, and
at least one controlled vehicle component (6, 8, 10),
**characterized in that** the system is configured to carry out the method as claimed in any one of the previous method claims,
wherein the at least one sensor is an acceleration sensor (41), a rotation sensor (42) or a tilt sensor(43),
wherein the at least one controlled vehicle component is a steering system (6), a brake system (8) or a drive system (10).

6. The system as claimed in claim 5, wherein the at least one sensor (41, 42, 43) is comprised by the control unit (4) or the at least one controlled vehicle component (6, 8, 10), or is a separate component or integral part of another component which is connected to the control unit (4) via a data connection (12).

7. The system as claimed in any one of the previous claims 5 or 6, further comprising:
an external information system (16) having a data processing unit (18), and
a data network interface (44), via which a communication link can be established to the external information system (16) using the processing unit (18).

8. The system as claimed in the previous claim 7, wherein the data network interface (44) is comprised by the control unit (4) or is a separate component or integral part of another component which is connected to the control unit (4) via the data connection (12).

## Revendications

1. Procédé d'évaluation de comportement de composant de véhicule qui présente les étapes consistant à :
émettre un signal de commande par un dispositif de commande (4) d'un véhicule automobile (2) à un composant de véhicule (6, 8, 10),
détecter une réaction du véhicule automobile (2) au signal de commande,
déterminer une modification du comportement de composant de véhicule,
classifier le comportement de composant de véhicule,
adapter la commande du composant de véhicule automobile (6, 8, 10) à la modification du composant de véhicule par le dispositif de commande (4),
**caractérisé en ce que**
la détection d'une réaction est une détection d'accélération, une détection de rotation ou une détection d'inclinaison, et
le signal de commande est un signal d'intervention de direction vers un système de direction (6), un signal de freinage vers un système de freinage (8) ou un signal d'entraînement vers un système d'entraînement (10).

2. Procédé selon la revendication précédente, dans lequel l'étape de détection, l'étape de détermination et l'étape de classification sont réalisées par le dispositif de commande (4).

3. Procédé selon l'une quelconque des revendications précédentes qui présente en outre les étapes consistant à :
transmettre la réaction détectée du véhicule automobile d'informations par l'intermédiaire d'un réseau de transmission de données (14) à un système d'information externe (16) avec une unité de traitement (18), dans lequel l'étape de détermination et l'étape de classification sont réalisées par l'unité de traitement (18), et
transmettre au dispositif de commande (4), par l'intermédiaire du réseau de transmission de données (14), des informations sur le comportement de composant de véhicule classifié.

4. Procédé selon l'une quelconque des revendications précédentes, dans lequel le comportement de composant de véhicule est un temps mort, une puissance de freinage ou une puissance d'entraînement.

5. Système d'évaluation de comportement de composant de véhicule, qui présente :
un dispositif de commande (4)
au moins un capteur (41, 42, 43) pour détecter un comportement de véhicule, et
au moins un composant de véhicule commandé (6, 8, 10),
**caractérisé en ce que**
le système est configuré pour mettre en oeuvre le procédé selon l'une quelconque des revendications de procédé précédentes,
dans lequel l'au moins un capteur est un capteur d'accélération (41), un capteur de rotation (42) ou un capteur d'inclinaison (43),
dans lequel l'au moins un composant de véhicule commandé est un système de direction (6), un système de freinage (8) ou un système d'entraînement (10).

6. Système selon la revendication 5, dans lequel l'au moins un capteur (41, 42, 43) est présenté par le dispositif de commande (4) ou l'au moins un composant de véhicule commandé (6, 8, 10) ou est une pièce ou partie constituante séparée d'une pièce supplémentaire qui est connectée au dispositif de commande (4) par l'intermédiaire d'une liaison de données (12).

7. Système selon l'une quelconque des revendications 5 ou 6 précédentes, qui présente en outre :
un système d'information externe (16) avec une unité de traitement de données (18), et
une interface de réseau de données (44) par l'intermédiaire de laquelle une liaison de communication avec le système d'information externe (16) peut être réalisée avec l'unité de traitement (18).

8. Système selon la revendication 7 précédente, dans lequel l'interface de réseau de données (44) est présentée par le dispositif de commande (4) ou est une pièce ou partie constituante séparée d'une pièce supplémentaire qui est connectée au dispositif de commande (4) par l'intermédiaire de la liaison de données (12).
